# EUROPÄISCHE PATENTSCHRIFT

(11) **EP 1 362 267 B1**
(45) Veröffentlichungstag und Bekanntmachung des Hinweises auf die Patenterteilung: **18.01.2006**
(21) Anmeldenummer: 02712761.2
(22) Anmeldetag: 09.02.2002
(51) Int. Cl.: G05B 17/02

(54) **VERFAHREN UND VORRICHTUNG ZUM EMULIEREN VON STEUER- UND/ODER REGELFUNKTIONEN EINES STEUER- ODER REGELGERÄTS**
METHOD AND DEVICE FOR EMULATING CONTROL AND/OR REGULATING FUNCTIONS OF A CONTROL OR REGULATING DEVICE
PROCEDE ET DISPOSITIF D'EMULATION DE FONCTIONS DE COMMANDE ET/OU DE REGULATION D'UNE UNITE DE COMMANDE OU DE REGULATION

(30) Priorität: 13.02.2001 DE 10106504
(43) Veröffentlichungstag der Anmeldung: 19.11.2003
(73) Patentinhaber: ROBERT BOSCH GMBH, 70442 Stuttgart (DE)
(72) Erfinder: WAGNER, Horst, 70469 Stuttgart (DE); STUERZL, Volker, 70374 Stuttgart (DE); SCHOENECK, Guenter, Verstorben (DE)
(86) Internationale Anmeldenummer: PCT/DE2002/000480
(87) Internationale Veröffentlichungsnummer: WO 2002/065220

(56) Entgegenhaltungen:
- EP-A- 0 879 675
- DE-A- 3 917 979
- FR-A- 2 767 395
- US-A- 5 079 731
- US-A- 5 752 008
- US-A- 5 826 060

## Beschreibung

### Stand der Technik

Die vorliegende Erfindung betrifft ein Verfahren zum Emulieren von Steuer- und/oder Regelfunktionen eines Steuer-/ Regelgeräts insbesondere eines Kraftfahrzeugs. Das Emulieren erfolgt durch Auslagern der Funktionen in einen externen Emulationsrechner. Vor Beginn der Emulation wird über eine Software-Schnittstelle des Emulationsrechners und eine Software-Schnittstelle des Steuer-/ Regelgeräts eine Datenverbindung hergestellt.

Die Erfindung betrifft außerdem eine Emulationsvorrichtung, die ein Steuer- oder Regelgerät insbesondere eines Kraftfahrzeugs und einen externen Emulationsrechner umfasst. Die Emulationsvorrichtung dient zum Emulieren von Steuer- und/oder Regelfunktionen des Steuer-/ Regelgeräts durch Auslagern der Funktionen in den Emulationsrechner. Das Steuer-/ Regelgerät und der Emulationsrechner weisen jeweils eine Software-Schnittstelle auf und das Steuer-/ Regelgerät und der Emulationsrechner stehen über eine vor Beginn der Emulation über die Software-Schnittstellen aufbaubare Datenverbindung miteinander in Verbindung.

Des Weiteren betrifft die vorliegende Erfindung ein Speicherelement für ein Steuer- oder Regelgerät eines Kraftfahrzeugs. Auf dem Speicherelement ist ein Computerprogramm abgespeichert, das auf einem Rechengerät, insbesondere auf einem Mikroprozessor, ablauffähig ist. Das Speicherelement ist insbesondere als ein Read-Only-Memory, als ein Random-Access-Memory oder als ein Flash-Memory ausgebildet. Schließlich betrifft die Erfindung auch ein Computerprogramm.

Emulationsvorrichtungen zum Emulieren von Steuer-/ Regelfunktionen eines Steuer-/ Regelgeräts werden bei der Entwicklung bzw. der softwaremäßigen Realisierung neuer Steuer-/ Regelfunktionen als sog. Prototyping-Tools eingesetzt werden. Eine solche Emulationsvorrichtung wird auch als Bypass bezeichnet. Mit Hilfe des Bypasses können Funktionen eines beliebigen Steuer-/ Regelgeräts (ECU, Electronic Control Unit) in einen externen Emulationsrechner ausgelagert werden. Die Kommunikation zwischen dem Steuer-/ Regelgerät und dem Emulationsrechner erfolgt über eine Datenleitung, die bspw. als eine Busleitung, insbesondere als eine Controller Area Network (CAN)-Busleitung, ausgebildet ist. Zum Zwecke der Kommunikation ist sowohl in dem Steuer-/ Regelgerät als auch in dem Emulationsrechner eine Software-Schnittstelle vorgesehen.

Aus der DE 33 18 410 A1 ist ein Verfahren zum Emulieren von Funktionen eines Steuergerätes der eingangs beschriebenen Art bekannt. Neue Steuer-/ Regelprogramme können in höheren Programmiersprachen auf einfache Weise auf leistungsfähigen Emulationsrechnern erstellt werden, wodurch eine schnelle Entwicklung der Software-Funktionen gegeben ist (Rapid Prototyping). Zur Erprobung der neu programmierten Funktionen wird der Emulationsrechner über die Datenverbindung mit einem Steuer-/ Regelgerät verbunden, für das die Funktionen erstellt wurden. Die neuen Funktionen werden auf dem Emulationsrechner emuliert während die übrigen Teile des Steuer-/ Regelprogramms auf dem Steuer-/ Regelgerät ablaufen. Dadurch kann bereits in der Entwicklungsphase von neuen Software-Funktionen ein Serien-Steuergerät eingesetzt werden, so dass Versuche mit neu programmierten Funktionen besonders seriennah verlaufen.

Vor Beginn einer Emulation wird die Datenverbindung zwischen dem Emulationsrechner und dem Steuergerät über die Software-Schnittstellen hergestellt. Während einer Initialisierungsphase des Emulationsrechners überträgt dieser nach einem fest vorgegebenen Übertragungsprotokoll bestimmte Daten der zu emulierenden Funktionen. Diese Daten werden in dafür vorgesehenen Tabellen in dem Steuergerät abgelegt. Im Bypassbetrieb wird die Kommunikation von dem Steuergerät an den Emulationsrechner durch feste Triggerereignisse ausgelöst. Die Art der Kommunikation zwischen dem Steuergerät und dem Emulationsrechner ist durch die in den Tabellen abgelegten Daten festgelegt.

Eine Emulationsvorrichtung der eingangs genannten Art ist auch aus der DE 39 17 979 C2 bekannt. Dort wird ein Bypass beschrieben, der eine standardisierte Hardware-Schnittstelle an einem Steuergerät zum Aufbau der Datenverbindung nutzt. Das Steuergerät greift während des Bypassbetriebs entweder auf einen Schreib-/ Lesespeicher der Emulationsvorrichtung, in dem die zu emulierende Funktion abgelegt ist, oder auf einen Lesespeicher des Steuergeräts zu, auf dem der eigentliche Programmablauf des Steuer-/ Regelprogramms abgespeichert ist. Nach dem Auslösen eines Triggerereignisses wird auf dem Mikroprozessor des Steuer-/ Regelgeräts nicht mehr das Steuer-/ Regelprogramm ausgeführt, sondern auf den Schreib-/ Lesespeicher der Emulationsvorrichtung umgeschaltet und die zu emulierende Funktion ausgeführt.

In der vorliegenden Anmeldung wird ausdrücklich auf die DE 33 18 410 A1 und die DE 39 17 979 C2 Bezug genommen.

Bei den aus dem Stand der Technik bekannten Verfahren und Vorrichtungen zum Emulieren von Funktionen eines Steuer-/ Regelgeräts ist es nachteilig, dass die Schnittstellen des Steuer-/ Regelgeräts und des Emulationsrechners auf die zu emulierenden Funktionen ausgerichtet und entsprechend festgelegt sind (entweder durch eine feste Programmierung der Software-Schnittstellen oder durch eine feste Hardwarekonfiguration der Hardware-Schnittstellen). Insbesondere ist das Protokoll für die Datenübertragung zwischen dem Emulationsrechner und dem Steuer-/ Regelgerät während des Bypassbetriebs fest vorgegeben. So kann bspw. die Größe der Tabellen, die Wortlänge der übertragenen Konfigurationsdaten, das Zeitraster für die Datenübertragung und Angaben darüber, ob mit oder ohne Überwachung der Datenverbindung gearbeitet wird, nur durch aufwendiges Umprogrammieren der Software-Schnittstellen an neue zu emulierende Steuer-/ Regelfunktionen angepasst werden. Durch diese notwendigen Änderungen der Software an der Schnittstelle werden die Möglichkeiten des Rapid Prototyping erheblich beschränkt.

Es ist deshalb die Aufgabe der vorliegenden Erfindung, eine Möglichkeit zu schaffen, die Entwicklung und Programmierung neuer Steuer-/ Regelfunktionen eines Steuer-/ Regelgeräts deutlich zu beschleunigen.

Zur Lösung dieser Aufgabe schlägt die Erfindung ausgehend von dem Verfahren zum Emulieren von Steuer-/ Regelfunktionen der eingangs genannten Art vor, dass die Software-Schnittstellen zur Emulation von unterschiedlichen Steuer-/ Regelfunktionen vor Beginn der Emulation konfiguriert werden, wobei Konfigurationsdaten über die Datenverbindung übermittelt werden.

Gemäß der vorliegenden Erfindung sind die Software-Schnittstellen also frei programmierbar, so dass ein Protokoll für die Datenübertragung zwischen dem Steuer-/ Regelgerät und dem Emulationsrechner an die jeweiligen zu emulierenden Steuer-/ Regelfunktionen angepasst werden kann. Die Anpassung erfolgt ohne eine Umprogrammierung der Software-Schnittstellen. Dadurch eröffnen sich neue Möglichkeiten im Rahmen des Rapid Prototyping für die Entwicklung und Programmierung neuer Steuer-/ Regelfunktionen eines Steuer-/ Regelgeräts.

Zur Konfiguration der Software-Schnittstellen werden vor der Emulation von Steuer-/ Regelfunktionen Konfigurationsdaten von dem Emulationsrechner an das Steuer-/ Regelgerät über die Datenverbindung übermittelt. Die Konfigurationsdaten umfassen bspw. die Größe der Tabellen, in denen Daten zur Definition der zu emulierenden Funktionen abgelegt werden, die Wortlängen der Daten, das Zeitraster, in dem das Steuer-/ Regelprogramm abläuft, und Angaben darüber, ob die Datenverbindung während des Bypassbetriebs überwacht wird oder nicht. Das Zeitraster kann entweder fest vorgegeben oder aber ereignisorientiert sein. Die Konfigurationsdaten werden zur Spezifikation des Übertragungsprotokolls für die Datenübertragung und zur Konfiguration der Software-Schnittstellen herangezogen.

Gemäß einer vorteilhaften Weiterbildung der vorliegenden Erfindung wird vorgeschlagen, dass Software-Schnittstellen aus einer vorgebbaren Menge an Mess- und Eingriffsgrößen zur Emulation von unterschiedlichen Steuer-/ Regelfunktionen konfiguriert werden. Aus einer bereits vorhandenen Bibliothek mit verschiedenen Konfigurationsdaten werden also die für die aktuell zu emulierende Funktion geeigneten ausgewählt und die Software-Schnittstellen entsprechend programmiert.

Gemäß einer bevorzugten Ausführungsform der Erfindung wird vorgeschlagen, dass die Ressourcen für die Datenverbindung und die Ressourcen eines Schreib-/ Lese-Speichers des Steuer-/ Regelgeräts entsprechend der Schnittstellenkonfiguration dynamisch verwaltet werden. Es wird also gewissermaßen eine Zuordnungs (sog. Allocation)-Schicht eingeführt, die Zugriffe auf in den Tabellen abgelegte Daten auf die entsprechende Tabelle und die entsprechende Tabellenposition umleitet. Durch eine Definition dieser Allocation-Schicht vor Beginn der Emulation kann die Größe der Tabellen und die Wortlängen der darin abgelegten Daten variabel gewählt werden bzw. an die Schnittstellenkonfiguration angepasst werden.

Gemäß einer anderen vorteilhaften Weiterbildung der vorliegenden Erfindung wird vorgeschlagen, dass die Konfiguration an dem Emulationsrechner festgelegt wird und die Konfigurationsdaten vor Beginn der Emulation an das Steuer-/ Regelgerät über die Datenverbindung übertragen werden. Im Rahmen der Programmierung der zu emulierenden Funktion auf dem Emulationsrechner in einer höheren Programmiersprache wird auch festgelegt, wie die Software-Schnittstellen des Emulationsrechners und des Steuer-/ Regelgeräts zu konfigurieren sind. Vor Beginn der Emulation werden die Konfigurationsdaten dann an das Steuer-/ Regelgerät übertragen.

Die Konfigurationsdaten werden vorteilhafterweise während einer Initialisierungsphase des Emulationsrechners an das Steuer-/ Regelgerät übertragen.

Als eine weitere Lösung der Aufgabe der vorliegenden Erfindung wird ausgehend von der Emulationsvorrichtung der eingangs genannten Art vorgeschlagen, dass die Software-Schnittstellen zur Emulation von unterschiedlichen Steuer-/ Regelfunktionen vor Beginn der Emulation konfigurierbar sind, wobei die Emulationsvorrichtung derart ausgestaltet ist, dass Konfigurationsdaten über die Datenverbindung übermittelt werden.

Gemäß einer vorteilhaften Weiterbildung der vorliegenden Erfindung wird vorgeschlagen, dass die Datenverbindung als ein serielles Bussystem, insbesondere als ein Controller Area Network (CAN)-Bus, ausgebildet ist.

Von besonderer Bedeutung ist die Realisierung des erfindungsgemäßen Verfahrens in der Form eines Speicherelements, das für ein Steuer-/ Regelgerät eines Kraftfahrzeugs vorgesehen ist. Dabei ist auf dem Speicherelement ein Computerprogramm abgespeichert, das auf einem Rechengerät, insbesondere auf einem Mikroprozessor des Steuer-/ Regelgeräts, ablauffähig und zur Ausführung des erfindungsgemäßen Verfahrens geeignet ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren, zu dessen Ausführung das Computerprogramm geeignet ist. Als Speicherelement kann insbesondere ein elektrisches Speichermedium zur Anwendung kommen, bspw. ein Read-Only-Memory, ein Random-Access-Memory oder ein Flash-Memory.

Die Erfindung betrifft auch ein Computerprogramm, das zur Ausführung des erfindungsgemäßen Verfahrens geeignet ist, wenn es auf einem Rechengerät, insbesondere auf einem Mikroprozessor, ausgeführt wird. Besonders bevorzugt ist dabei, wenn das Computerprogramm auf einem Speicherelement, insbesondere auf einem Flash-Memory, abgespeichert ist.

Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein Blockschaltbild einer erfindungsgemäßen Emulationsvorrichtung gemäß einer bevorzugten Ausführungsform; und
- Figur 2: ein Ablaufdiagramm eines erfindungsgemäßen Emulationsverfahrens gemäß einer bevorzugten Ausführungsform.

### Beschreibung der Ausführungsbeispiele

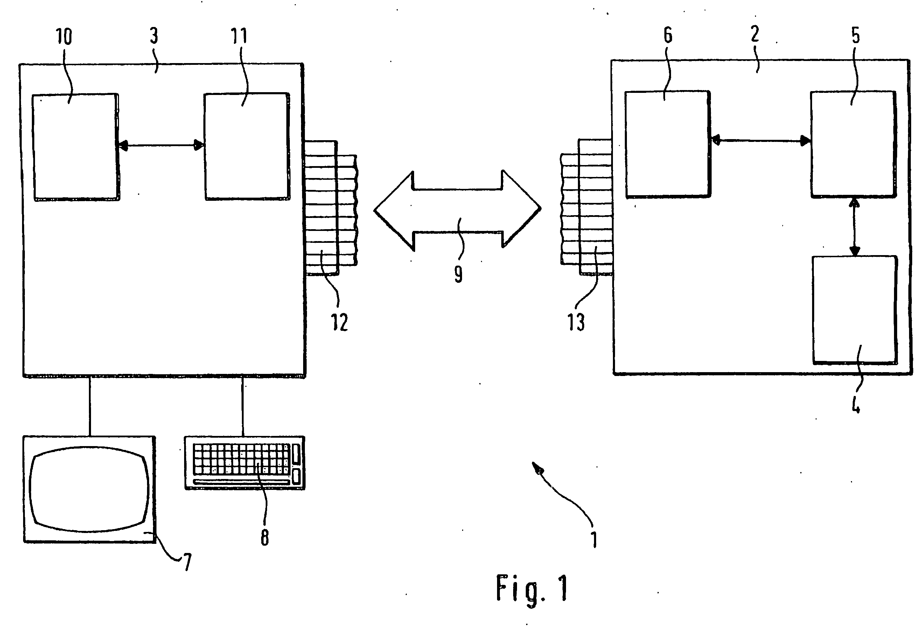

In Figur 1 ist eine erfindungsgemäße Emulationsvorrichtung in ihrer Gesamtheit mit dem Bezugszeichen 1 bezeichnet. Die Emulationsvorrichtung 1 umfasst ein Steuer- oder Regelgerät 2 eines Kraftfahrzeugs und einen externen Emulationsrechner 3. Die Emulationsvorrichtung 1 dienst als Prototyping Werkzeug zum Rapid Prototyping von Software. Das Steuer-/ Regelgerät 2 dient zur Steuerung/ Regelung bestimmter Funktionen eines Kraftfahrzeugs, bspw. der Brennkraftmaschine, der Lenkung, der Bremsen, des Getriebes und/oder der Straßenlage des Kraftfahrzeugs. Das Steuer-/ Regelgerät 2 weist ein Speicherelement 4 auf, auf dem ein Steuer-/ Regelprogramm abgespeichert ist. Das Speicherelement 4 ist bspw. als ein Flash-Speicher ausgebildet. Das Steuer-/ Regelprogramm ist auf einem Mikroprozessor 5 ablauffähig. Während des Programmablaufs werden Daten aus einem Schreib-/ Lesespeicher 6 ausgelesen bzw. in diesem abgelegt. Durch den Ablauf des Steuer-/ Regelprogramms erfüllt das Steuer-/ Regelgerät 2 die ihm zugeordnete Steuerungs-/ Regelungsaufgabe.

Der Emulationsrechner 3 verfügt über einen Bildschirm 7 und wahlweise über weitere Ausgabeeinrichtungen und über eine Tastatur 8 und wahlweise über weitere Eingabeeinrichtungen. Neue oder veränderte Steuer-/ Regelungsfunktionen des Steuer-/ Regelungsprogramms werden auf dem Emulationsrechner 3 programmiert. Zur Erprobung der neu programmierten Funktionen in einem sog. Bypass-Betrieb wird der Emulationsrechner 3 zunächst über eine Datenverbindung 9 an das Steuer-/ Regelgerät 2 angeschlossen. Die Datenverbindung 9 ist als eine Controller Area Network (CAN)-Busleitung ausgebildet.

Während des Bypass-Betriebs wird das Steuer-/ Regelprogramm auf dem Steuer-/ Regelgerät 2 ausgeführt. Sobald während des Programmablaufs ein Triggerereignis ausgelöst wird, wird die in dem Emulationsrechner 3 modellierte Steuer-/ Regelprogrammfunktion aufgerufen und ausgeführt. Der Emulationsrechner verfügt über ein weiteres Speicherelement 10, auf dem die zu emulierende Steuer-/ Regelfunktion abgelegt ist. Zur Ausführung der Funktion verfügt der Emulationsrechner 3 über einen Mikroprozessor 10. Vor oder während der Ausführung der Programmfunktion werden Daten über die Datenverbindung 9 aus dem Schreib-/ Lesespeicher 6 des Steuer-/ Regelgeräts 2 ausgelesen und nach der Programmausführung auf diesem abgelegt.

Nach der Ausführung der Programmfunktion in dem Emulationsrechner 3 wird wieder zu dem Ablauf des Steuer-/ Regelprogramms in dem Steuer-/ Regelgerät 2 zurückgekehrt.

Alternativ können das Regelprogramm in dem Steuer-/ Regelgerät 2 und die Programmfunktion in dem Emulationsrechner 3 auch parallel zueinander ablaufen. Auf diese Weise kann eine neu erstellte Steuer-/ Regelprogrammfunktion bereits in der Entwicklungsphase auf einem Serien-Steuer-/ Regelgerät 2 ausgeführt werden, was eine besonders seriennahe Erprobung ermöglicht.

Zur Steuerung und Koordination der Kommunikation zwischen dem Emulationsrechner 3 und dem Steuer-/ Regelgerät 2 ist an dem Emulationsrechner 3 und dem Steuer-/ Regelgerät 2 jeweils eine frei konfigurierbare Software-Schnittstelle 12, 13 ausgebildet. Zusammen mit der Programmierung der Steuer-/ Regelfunktion werden auch Konfigurationsdaten zur Konfiguration der Software-Schnittstellen 12, 13 erstellt. Die für die aktuell zu emulierende Funktion geeigneten Konfigurationsdaten können bspw. aus einer vorhandenen Bibliothek mit verschiedenen Konfigurationsdaten entnommen werden. Durch die freie Konfiguration der Software-Schnittstellen 12, 13 kann ein Protokoll für die Datenübertragung zwischen dem Steuer-/ Regelgerät 2 und dem Emulationsrechner 3 an die jeweiligen zu emulierenden Steuer-/ Regelfunktionen angepasst werden. Eine aufwendige Umprogrammierung der Software-Schnittstellen zur Emulation unterschiedlicher Funktionen ist nicht mehr notwendig.

Die Konfigurationsdaten umfassen bspw. die Größen von Tabellen, in denen Daten zur Definition der zu emulierenden Funktionen abgelegt werden, die Wortlängen der Daten, das Zeitraster, in dem gearbeitet wird, und Angaben darüber, ob die Datenverbindung 9 während des Bypass-Betriebs überwacht wird oder nicht. Die Tabellen werden in dem Schreib-/ Lesespeicher6 angelegt. Erfindungsgemäß werden die Zugriffe auf in den Tabellen abgelegte Daten mittels einer Zuordnungs-(sog. Allocation)-Schicht auf die entsprechenden Tabellen und die entsprechenden Tabellenpositionen umgeleitet.

Vor Beginn der Emulation der neu programmierten Funktionen in dem Emulationsrechner 3 werden die Konfigurationsdaten während einer Initialisierungsphase des Emulationsrechners 3 über die Datenverbindung 9 an das Steuer-/ Regelgerät 2 übertragen und die Software-Schnittstellen 10, 11 entsprechend konfiguriert. Während der Initialisierung werden auch die Hardware-Schnittstellen (CAN) entsprechend der Konfiguration initialisiert bzw. konfiguriert.

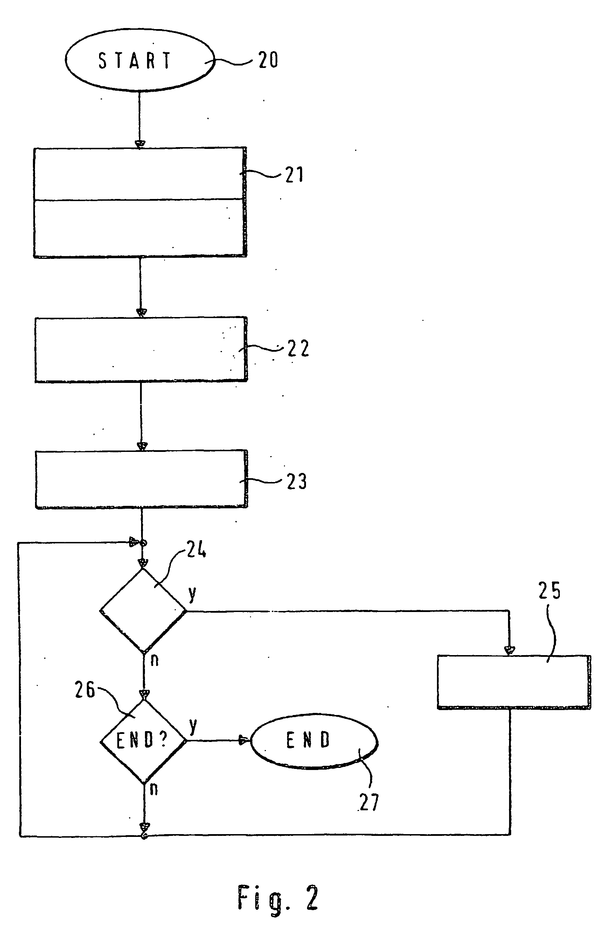

Das erfindungsgemäße Verfahren für einen Bypass-Betrieb eines Steuer-/ Regelgeräts 2 eines Kraftfahrzeugs wird nachfolgend anhand der Figur 2 kurz erläutert. Das Verfahren beginnt in einem Funktionsblock 20. Es schließt sich eine Initialisierung des Emulationsrechners 3 in Funktionsblock 21 an. Im Rahmen der Initialisierung werden auch die Konfigurationsdaten an das Steuer-/ Regelgerät 2 übertragen. In einem Funktionsblock 22 werden dann die Software-Schnittstellen 12, 13 den Konfigurationsdaten entsprechend konfiguriert.

Dann wird in einem Funktionsblock 23 die Ausführung des Steuer-/ Regelprogramms in dem Steuer-/ Regelgerät 2 begonnen. Das Steuer-/ Regelprogramm kann auch bereits vor der Schnittstelleninitialisierung (Funktionsblock 22) gestartet worden sein. Durch einen Trigger wird die Berechnung auf der Emulationsvorrichtung 1 gestartet. Die Definition der Triggerereignisse erfolgte über die Konfiguration der Software-Schnittstellen 12, 13 in dem Funktionsblock 22. Nach der Ausführung des Steuer-/ Regelprogramms bzw. der Steuer-/ Regelfunktion schreiben das Steuer-/ Regelgerät 2 und der Emulationsrechner 3 die Ergebnisse in den Schreib-/ Lesespeicher 6.

In einem Abfrageblock 24 wird überprüft, ob während des Programmablaufs Daten aus dem Schreib-/ Lesespeicher 6 abzuholen sind. Falls ja, werden in einem Funktionsblock 25 Daten aus dem Schreib-/ Lesespeicher 6 geholt. Anschließend wird wieder zu der Ausführung des Steuer-/ Regelprogramms in dem Steuer-/ Regelgerät 2 zurückgekehrt und zu dem Abfrageblock 24 verzweigt.

Falls keine Daten mehr aus dem Schreib-/ Lesespeicher 6 abzuholen sind, wird in einem Abfrageblock 26 überprüft, ob das Steuer-/ Regelprogramm beendet ist. Falls ja, wird es in einem Funktionsblock 27 beendet. Anderenfalls wird Ausführung des Steuer-/ Regelprogramms in dem Steuer-/ Regelgerät 2 fortgesetzt und zu dem Abfrageblock 24 verzweigt.

## Patentansprüche

1. Verfahren zum Emulieren von Steuer- und/oder Regelfunktionen eines Steuer- oder Regelgeräts (2) insbesondere eines Kraftfahrzeugs durch Auslagern der Funktionen in einen externen Emulationsrechner (3), wobei vor Beginn der Emulation über eine Software-Schnittstelle (12) des Emulationsrechners (3) und eine Software-Schnittstelle (13) des Steuer-/ Regelgeräts (2) eine Datenverbindung (9) hergestellt wird, **dadurch gekennzeichnet, dass** die Software-Schnittstellen (12, 13) zur Emulation von unterschiedlichen Steuer-/ Regelfunktionen vor Beginn der Emulation konfiguriert werden, wobei Konfigurationsdaten über die Datenverbindung übermittelt werden.

2. Verfahren nach Anspruch 1, **dadurch gekennzeichnet, dass** die Software-Schnittstellen (12, 13) aus einer vorgebbaren Menge an Mess- und Eingriffsgrößen zur Emulation von unterschiedlichen Steuer-/ Regelfunktionen konfiguriert werden.

3. Verfahren nach Anspruch 2, **dadurch gekennzeichnet, dass** die Ressourcen für die Datenverbindung (9) und die Ressourcen eines Schreib-/ Lese-Speichers (6) des Steuer-/ Regelgeräts (2) entsprechend der Schnittstellenkonfigurationen dynamisch verwaltet werden.

4. Verfahren nach einem der Ansprüche 1 bis 3, **dadurch gekennzeichnet, dass** die Konfiguration an dem Emulationsrechner (3) festgelegt wird und die Konfigurationsdaten vor Beginn der Emulation an das Steuer-/ Regelgerät (2) über die Datenverbindung (9) übertragen werden.

5. Verfahren nach Anspruch 4, **dadurch gekennzeichnet, dass** die Konfigurationsdaten während einer Initialisierungsphase des Emulationsrechners (3) an das Steuer-/ Regelgerät (2) übertragen werden.

6. Emulationsvorrichtung (1) umfassend ein Steuer- oder Regelgerät (2) insbesondere eines Kraftfahrzeugs und einen externen Emulationsrechner (3), wobei die Emulationsvorrichtung (1) zum Emulieren von Steuer- und/oder Regelfunktionen des Steuer-/ Regelgeräts (2) durch Auslagern der Funktionen in den Emulationsrechner (3) dient, das Steuer-/ Regelgerät (2) eine Software-Schnittstelle (13) und der Emulationsrechner (3) eine Software-Schnittstelle (12) aufweist und das Steuer-/ Regelgerät (2) und der Emulationsrechner (13) über eine vor Beginn der Emulation über die Software-Schnittstellen (12, 13) aufbaubare Datenverbindung (9) miteinander in Verbindung stehen, **dadurch gekennzeichnet, dass** die Software-Schnittstellen (12, 13) zur Emulation von unterschiedlichen Steuer-/ Regelfunktionen vor Beginn der Emulation konfigurierbar sind, wobei die Emulationsvorrichtung derart ausgestaltet ist, dass Konfigurationsdaten über die Datenverbindung übermittelt werden.

7. Emulationsvorrichtung (1) nach Anspruch 6, **dadurch gekennzeichnet, dass** die Datenverbindung (9) als ein serielles Bussystem, insbesondere als ein Controller Area Network (CAN)-Bus, ausgebildet ist.

8. Speicherelement (4), insbesondere Read-Only-Memory, Random-Access-Memory oder Flash-Memory, für ein Steuer- oder Regelgerät (2) eines Kraftfahrzeugs, auf dem ein Computerprogramm abgespeichert ist, das auf einem Rechengerät, insbesondere auf einem Mikroprozessor (5), ablauffähig und zur Ausführung eines Verfahrens nach einem der Ansprüche 1 bis 5 geeignet ist.

9. Computerprogramm, **dadurch gekennzeichnet, dass** es zur Ausführung eines Verfahrens nach einem der Ansprüche 1 bis 5 geeignet ist, wenn es auf einem Rechengerät, insbesondere auf einem Mikroprozessor (5), abläuft.

10. Computerprogramm nach Anspruch 9, **dadurch gekennzeichnet, dass** es auf einem Speicherelement (4), insbesondere auf einem Flash-Memory, abgespeichert ist.

## Claims

1. Method for emulating open-loop and/or closed-loop control functions of an open-loop or closed-loop control device (2), in particular of a motor vehicle by exporting the functions into an external emulation computer (3), wherein before the start of the emulation a data link (9) is set up via a software interface (12) of the emulation computer (3) and a software interface (13) of the open-loop/closed-loop control device (2), **characterized in that** the software interfaces (12, 13) are configured to emulate different open-loop/closed-loop control functions before the start of the emulation, wherein configuration data is transferred via the data link.

2. Method according to Claim 1, **characterized in that** the software interfaces (12, 13) are configured from a predefinable setup of measuring variables and intervention variables for emulating different open-loop/closed-loop control functions.

3. Method according to Claim 2, **characterized in that** the resources for the data link (9) and the resources of a read/write memory (6) of the open-loop/closed-loop control device (2) are administered dynamically in accordance with the interface configurations.

4. Method according to one of Claims 1 to 3,
**characterized in that** the configuration is defined at the emulation computer (3) and the configuration data is transmitted to the open-loop/closed-loop control device (2) via the data link (9) before the start of the emulation.

5. Method according to Claim 4, **characterized in that** the configuration data is transmitted to the open-loop/closed-loop control device (2) during an initialization phase of the emulation computer (3).

6. Emulation device (1) comprising an open-loop or closed-loop control device (2), in particular of a motor vehicle, and an external emulation computer (3), wherein the emulation device (1) serves to emulate open-loop and/or closed-loop control functions of the open-loop/closed-loop control device (2) by exporting the functions into the emulation computer (3), the open-loop/closed-loop control device (2) has a software interface (13) and the emulation computer (3) has a software interface (12), and the open-loop/closed-loop control device (2) and the emulation computer (13) are connected to one another via a data link (9) which can be set up via the software interfaces (12, 13) before the start of the emulation, **characterized in that** the software interfaces (12, 13) can be configured to emulate different open-loop/closed-loop control functions before the start of the emulation, wherein the emulation device is configured in such a way that configuration data is transferred via the data link (7).

7. Emulation device (1) according to Claim 6, **characterized in that** the data link (9) is embodied as a serial bus system, in particular as a controller area network (CAN) bus.

8. Memory element (4), in particular read-only memory, random-access memory or flash memory for an open-loop or closed-loop control device (2) of a motor vehicle on which a computer program can be stored, which program can run on an arithmetic unit, in particular on a microprocessor (5) and is suitable for carrying out a method according to one of Claims 1 to 5.

9. Computer program, **characterized in that** it is suitable for carrying out a method according to one of Claims 1 to 5, if it runs on an arithmetic unit, in particular on a microprocessor (5).

10. Computer program according to Claim 9, **characterized in that** it is stored on a memory element (4), in particular on a flash memory.

## Revendications

1. Procédé pour émuler des fonctions de commande et/ou de régulation d'un appareil de commande ou de régulation (2), en particulier d'un véhicule automobile, en transférant les fonctions dans un ordinateur d'émulation (3) externe, en établissant une liaison de données (9) avant de commencer l'émulation par l'intermédiaire d'une interface logicielle (12) de l'ordinateur d'émulation (3) et d'une interface logicielle (13) de l'appareil de commande ou de régulation (2),
**caractérisé en ce que**
les interfaces logicielles (12, 13) pour émuler différentes fonctions de commande et/ou de régulation sont configurées avant de commencer l'émulation, les données de configuration étant transmises par l'intermédiaire de la liaison de données.

2. Procédé selon la revendication 1,
**caractérisé en ce que**
les interfaces logicielles (12, 13) sont configurées à partir d'une quantité prédéfinissable de grandeurs de mesure et d'intervention afin d'émuler différentes fonctions de commande et/ou de régulation.

3. Procédé selon la revendication 2,
**caractérisé en ce que**
les ressources destinées à la liaison de données (9) et les ressources d'une mémoire d'écriture ou de lecture (6) de l'appareil de commande ou de régulation (2) sont gérées dynamiquement d'après la configuration des interfaces.

4. Procédé selon l'une des revendications 1 à 3,
**caractérisé en ce que**
la configuration est effectuée sur l'ordinateur d'émulation (3) et les données de configuration sont transmises à l'appareil de commande ou de régulation (2) par l'intermédiaire de la liaison de données (9) avant de commencer l'émulation.

5. Procédé selon la revendication 4,
**caractérisé en ce que**
les données de configuration sont transmises à l'appareil de commande ou de régulation (2) pendant que l'ordinateur d'émulation (3) est dans une phase d'initialisation.

6. Dispositif d'émulation (1) comportant un appareil de commande ou de régulation (2), en particulier d'un véhicule automobile, et un ordinateur d'émulation (3) externe, dans lequel le dispositif d'émulation (1) sert à émuler des fonctions de commande et/ ou de régulation de l'appareil de commande ou de régulation (2) en transférant les fonctions dans l'ordinateur d'émulation (3), l'appareil de commande ou de régulation (2) comporte une interface logicielle (13) et l'ordinateur d'émulation (3) une interface logicielle (12), l'appareil de commande ou de régulation (2) ainsi que l'ordinateur d'émulation (13) étant reliés l'un à l'autre par l'intermédiaire d'une liaison de données (9) qui peut être établie avant de commencer l'émulation par l'intermédiaire des interfaces logicielles (12, 13),
**caractérisé en ce que**
les interfaces logicielles (12, 13) pour émuler différentes fonctions de commande et/ou de régulation peuvent être configurées avant de commencer l'émulation, le dispositif d'émulation étant conçu de telle manière que les données de configuration sont transmises par l'intermédiaire de la liaison de données.

7. Dispositif d'émulation (1) selon la revendication 6,
**caractérisé en ce que**
la liaison de données (9) a la conception d'un système de bus série en particulier d'un bus de données CAN (Controller Area Network).

8. Élément de mémoire (4), en particulier mémoire morte, mémoire vive ou mémoire flash pour un appareil de commande ou de régulation (2) d'un véhicule automobile, sur lequel est enregistré un programme informatique exécutable sur ordinateur, en particulier sur un microprocesseur (5) et adapté à mettre en oeuvre un procédé selon l'une des revendications 1 à 5.

9. Programme informatique,
**caractérisé en ce qu'**
il est adapté pour mettre en oeuvre un procédé selon l'une des revendications 1 à 5 quand il se déroule sur un ordinateur, en particulier sur un microprocesseur (5).

10. Programme informatique selon la revendication 9,
**caractérisé en ce qu'**
il est enregistré sur un élément de mémoire (4), en particulier sur une mémoire flash.
